# EUROPEAN PATENT APPLICATION

(11) **EP 1 621 925 A1**
(43) Date of publication of application: **01.02.2006**
(21) Application number: 04747980.3
(22) Date of filing: 27.07.2004
(51) Int. Cl.: G02F 1/19, G09F 9/37

(54) **DISPLAY DEVICE**

(30) Priority: 29.07.2003 JP 2003282136
(71) Applicant: TDK Corporation, Chuo-ku, Tokyo 103-8272 (JP)
(72) Inventor: YASUDA, Noriyuki, Chuo-ku, Tokyo 1038272 (JP)
(74) Representative: Grünecker, Kinkeldey, Stockmair & Schwanhäusser Anwaltssozietät
(86) International application number: PCT/JP2004/010667
(87) International publication number: WO 2005/010605

(57) **Abstract**

A display device 100 includes a pair of substrates 11a, 11b; an electrically insulative solvent 50 accommodated between the substrates 11a, 11b; and a plurality of first particles 30 existing in the solvent 50; and performs display according to a difference in reflectance based on a change in spatial distribution of the first particles 30 between the substrates 11a, 11b; wherein the first particles 30 include carbon as a main ingredient and have a substantially spherical outer form.

## Description

### Technical Field

The present invention relates to a display device usable as electronic paper, for example, which performs display according to a difference in reflectance based on a change in spatial distribution of particles between substrates.

### Background Art

Electronic paper is positioned between the conventional paper display (so-called hardcopy) and the electronic display (so-called softcopy) typified by CRT and liquid crystal, and is expected to be used as electronic newspaper and the like. Unlike electronic display devices, the electronic paper is required to have a capability of keeping once-displayed screens (images, texts, etc.) without power thereafter (self-holding property). In particular, the electronic paper is desired to have a high visibility (contrast) on a par with that of printed matters while viewers can see its display screens for a long time without feeling so fatigued.

Conventionally known as techniques for displaying images and texts on such electronic paper are technologies of colored particle rotation, electrophoresis, thermal rewritable, liquid crystal, and electrochromy. For example, Patent Document 1 discloses a display device utilizing an electrophoresis phenomenon, in which a dispersion system containing electrophoretic particles is sealed between substrates, whereas the state of distribution of the electrophoretic particles in the dispersion system is controlled, so as to change optical reflection characteristics, thereby performing a required display action.

On the other hand, as a so-called toner display which moves conductive fine particles on a space, Patent Document 2 discloses a screen display device including an electric charge transfer layer as a surface layer.
Patent Document 1: Japanese Patent Application Laid-Open No. 2001-174853
Patent Document 1: Japanese Patent Application Laid-Open No. SHO 63-303325

### Disclosure of the Invention

### Problem to be Solved by the Invention

Meanwhile, carbon black which is highly resistant to light, weather, and electricity has widely been used as movable particles including a pigment in the above-mentioned conventional electrophoretic display devices or particle migration type display devices such as toner displays. This carbon black usually exists as a primary aggregate having an irregular outer shape in which a plurality of fine primary particles are fused together, or as a secondary aggregate having an irregular form in which such primary aggregates are further flocculated. Here, the fine primary particles are constituted by crystalline structures (crystallites).

Primary aggregates of carbon black having an irregular outer shape tend to be inferior in dispersibility in media and are likely to flocculate together so as to form a secondary aggregate. When a secondary aggregate of carbon black is formed, its apparent particle size increases, thereby yielding a fear of losing the display speed and visibility (contrast).

Secondary aggregates may gather to form a larger structure, and may cause short-circuiting if this structure reaches from one electrode to the other electrode.

In view of such circumstances, it is an object of the present invention to provide a display device which makes it harder for particles to flocculate and can reduce the occurrence of short-circuiting caused by particles between electrodes.

### Means for Solving Problem

The present invention provides a display device including a pair of substrates, an electrically insulating medium accommodated between the substrates, and a particle existing in the medium; the display device performing display according to a difference in reflectance based on a change in spatial distribution of the particle between the substrates; wherein the particle includes a plurality of first particles, mainly composed of carbon, having a substantially spherical outer form.

In the present invention, the first particles have a substantially spherical outer form and thus exhibit a surface area per volume smaller than that of particles having irregular shapes such as carbon black. This reduces the interaction between the first particles, so that the first particles are easier to disperse, whereby aggregates are harder to form. As a consequence, the moving speed of the first particles, i.e., display speed, increases, while display unevenness decreases, thereby improving the contrast. Since the first particles have a substantially spherical outer form, the number of points at which the first particles come into contact with each other decreases even when an aggregate of the first particles is formed. Since there are fewer conduction paths, the aggregate increases its resistance, whereby the electrodes are less likely to be short-circuited by the aggregate.

Preferably, the first particles contain carbon having an amorphous structure.

In this case, carbon having an amorphous structure (with no fixed form) exhibits a specific resistance greater than carbon such as carbon black mainly composed of a crystalline material in which usual flat structures of 6-membered carbon rings are laminated. Therefore, even when the first particles flocculate so as to form an aggregate, the aggregate further increases its resistance, whereby the short-circuiting between the electrodes is less likely to occur.

The first particle may include a core part mainly composed of carbon and a cladding part surrounding the core part and having a specific resistance greater than that of the core part.

In the case where a material having a specific resistance greater than that of the carbonaceous core is thus formed on the surface of the first particle; even when the first particles flocculate so as to form an aggregate, the aggregate further increases its resistance, whereby the short-circuiting between the electrodes is less likely to occur.

The first particle may have a surface combined with an organic functional group.

This can also increase the resistance in the surface of the first particle, so that, even when the first particles flocculate so as to form an aggregate, the aggregate further increases its resistance, whereby the short-circuiting between the electrodes is less likely to occur.

Preferably, the first particle is such a particle that a molded body formed by molding an aggregate of the first particles at a pressure of 5 MPa yields a volume resistivity of at least 5.0 Ω·cm.

In the case where the molded body formed by molding the first particles has a volume resistivity of at least 5.0 Ω·cm; even when the first particles flocculate within the solvent so as to form an aggregate, the aggregate sufficiently increases its resistance, whereby the short-circuiting between the electrodes can be reduced more effectively.

Preferably, the first particle has a particle size of 50 nm to 5 µm.

Using the first particles having such a particle size is preferred from the viewpoint of dispersibility, moving speed, and the like.

Preferably, the particle further includes a plurality of second particles different from the first particles, whereas the second particles have a surface color different from that of the first particles.

This realizes a so-called two-pigment type display device. Since the first particles have a spherical outer form here, the first and second particles are also harder to flocculate, whereby an improvement in contrast can be realized.

Preferably, the second particles have a substantially spherical outer form.

This can reduce the flocculation between the second particles, and the flocculation between the first and second particles, thereby further improving the contrast.

The display device may further comprise a shield between the substrates, the shield being adapted to cover the first particles moved to one of the substrates so as to make the first particles invisible from the other substrate side and having a color different from that of the first particles on a face opposing the other substrate.

This realizes a so-called one-pigment display device.

The display device may further comprise a partition between the substrates, the partition defining a plurality of spaces each tapering a cross-sectional area thereof from one of the substrates to the other substrate, the partition having a color different from that of the first particles at a part in contact with the spaces. This also realizes a one-pigment type display device.

Preferably, the display device contains 0.05 to 10 wt % of the first particles in terms of the weight of the medium.

At such a concentration, the reflectance of a part where the first particles gather by moving toward the substrate on the viewer side becomes sufficiently low so that the part is fully recognized as black by the viewer. This realizes a display device with a sufficient contrast. Since the number of first particles is not so large, the display speed becomes appropriate.

This can sufficiently hide the secondary particles such as titanium oxide and colors of the shield, partition, and the like, for example.

Preferably, the first particles exhibit electrophoresis when an electric field acts thereon.

This can favorably rewrite displayed contents in the display device by using a low power.

Preferably, the display device includes a pair of electrodes, whereas one of the electrodes is arranged in a matrix.

This can easily subject the first particles in the medium to electrophoresis for each part corresponding to a pixel.

The particles may move within an insulative liquid as a medium, or a gas (or vacuum) reduced to a substantially vacuum state or a gas having a pressure ranging from a quasi-atmospheric pressure to the atmospheric pressure as a medium. Here, it will be preferred if the display device further comprises an insulative liquid accommodated between the substrates, whereas a plurality of particles are provided so as to generate a spatial distribution change by moving within the insulative liquid. It will also be preferred if the display device includes a gas accommodated between the substrates at a predetermined pressure, whereas a plurality of particles are provided so as to generate a spatial distribution change by moving within the gas.

Desirable texts, figures, images, and the like can also be displayed in the display device in accordance with the present invention by other writing devices utilizing actions of heat, light, sound, magnetic field, and the like, for example.

### Effect of the Invention

The display device of the present invention provides a display device which makes it harder for particles to flocculate and can reduce the occurrence of short-circuiting caused by particles between electrodes. This can improve the reliability of the display device.

### Brief Description of the Drawings

[Fig. 1]Fig. 1 is a schematic sectional view showing a display device in accordance with a first embodiment;
[Fig. 2]Fig. 2 shows TEM images, in which (a) is a TEM image of carbonized bead, (b) is an enlarged view of a square frame in (a), (c) is a TEM image of carbon black, and (d) is an enlarged view of (c);
[Fig. 3]Fig. 3 is a sectional view showing another example of first particle;
[Fig. 4]Fig. 4 is a schematic sectional view showing the display device in accordance with a second embodiment;
[Fig. 5]Fig. 5 is a view taken along the line IV-IV of Fig. 4;
[Fig. 6]Fig. 6 is a view taken along the line V-V of Fig. 4;
[Fig. 7]Fig. 7 is a schematic sectional view showing the display device in accordance with a third embodiment;
[Fig. 8]Fig. 8 is a view taken along the line VIII-VIII of Fig. 7; and
[Fig. 9] Fig. 9 is a table showing results of Examples 1 to 7 and Comparative Examples 1 to 4.

### Explanations of Numerals

10...display device; 11a, 11b... substrate; 12a, 12b... electrode; 30 ... first particle; 30a... core part; 30b... insulative layer (cladding part); 40... secondary particle; 50... solvent; 14... microcapsule; 15 ... binder; 100,200, 300...display device; 205 ... partition; 320 ... shield.

### Best Modes for Carrying Out the Invention

### First Embodiment

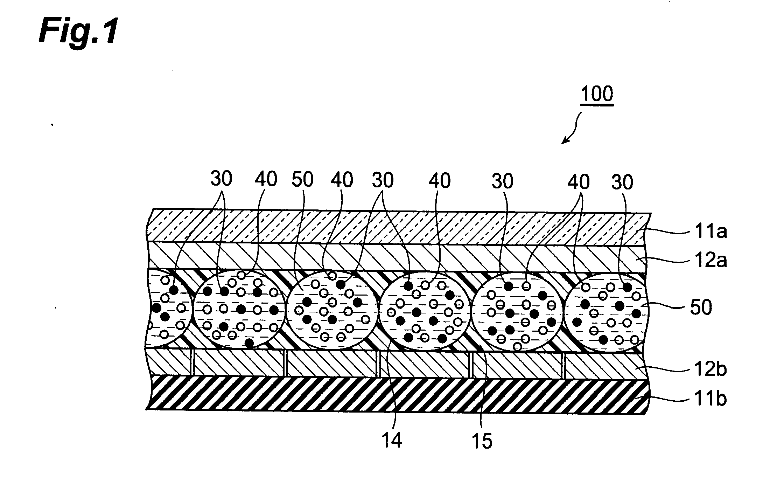

In the following, embodiments of the present invention will be explained in detail with reference to the drawings. Positional relationships such as upper/lower and left/right will be based on those in the drawings. Fig. 1 is a schematic sectional view showing a preferred first embodiment of the display device in accordance with the present invention.

This display device 100, which can be used as electronic paper, comprises microcapsules 14, each containing a plurality of first particles 30 and a plurality of second particles 40, disposed between two electrodes 12a, 12b (a pair of electrodes) provided on respective opposing surface sides of two substrates 11a, 11b. The first particles 30 and second particles 40 are dispersed within each microcapsule 14 containing a solvent 50 as a medium, so as to form a dispersion system. The microcapsules 14 are secured between the electrodes 12a, 12b with a binder 15 provided thereabout.

Here, the dispersion refers to a state where the first particles 30 and second particles 40 are scattered within the solvent 50, i.e., a suspended state. In this embodiment, the solvent 50 is opaque in a state including the first particles 30 and second particles 40.

Each of the first particles 30, which is a particle as a black pigment containing carbon as a main ingredient, has a substantially spherical outer form and exhibits electrophoresis in response to an electric field. The structure of carbon may be either amorphous or crystalline.

On the other hand, each of the second particles 40 is a particle as a white or pale non-black pigment, for which a particle containing white TiO₂ or polymer complex as a main ingredient, for example, can be used. The second particles 40 may exhibit electrophoresis in a direction different from that of the first particles 30 in response to an electric field or no electrophoresis in response to the electric field, or migrate in the same direction as with the first particles 30 at a speed different from that of the first particles 30 in response to the electric field. In short, it will be sufficient if there is a difference in moving speed between the first particle 30 and second particle 40 when the electric field is applied thereto. When the first particle 30 has a particles size of 50 nm while TiO₂ as the second particle 40 has a particle size of 1.5 µm, for example, the first particle 30 performs electrophoresis at a higher speed.

The solvent 50 is a solvent having a high insulation resistivity, and is a dispersion medium for the first particles 30 and second particles 40. For such a solvent, aromatic hydrocarbons, aliphatic hydrocarbons, various oils such as silicone oil and fluorine oil, and the like, for example, can be used singly or in appropriate mixtures. More specifically, various solvents such as n-decane, liquid paraffin, isoparaffin, dodecylbenzene, dimethylpolysiloxane, methylphenylpolysiloxane, perfluorononane, and perfluorotri-n-propylamine can be used. Among them, silicone oil and fluorine oil are preferably used from the viewpoint of low harmfulness.

Preferably, the solvent 50 contains a dispersing agent in order to improve the dispersibility of the first particles 30 and second particles 40. Various dispersing agents can be used as the dispersing agent, examples of which include aliphatic acid salts, alkyl sulfates, alkoxy sulfates, alkylbenzene sulfonates, polycarboxylic acids, amine acetates, benzylammonium salts, polyalkyleneglycol derivatives, sorbitan esters, sorbitan ester ethers, monoglyceride polyglycerine alkyl esters, alkanolamides, alkylpolyether amines, and amine oxides.

The surface of the first particle 30 may be treated so as to impart a dispersibility thereto. For example, a surface treatment agent may be used for combining linear, cyclic, and branched functional groups, ion groups, and polymer chains to the surface.

In the case where the solvent 50 contains silicone oil in particular, using alcohol-denatured, polyether-denatured, or aminodenatured silicone oil or the like as a surfactant improves the dispersibility, so as to improve the initial dispersibility, thereby preventing precipitation from being formed.

The solvent 50 is preferably a transparent colorless liquid, though it may be a colored liquid. Solutes such as resins may be dissolved in the solvent 50 as well.

It will be preferred if a dispersion solution is prepared by using a device such as homogenizer, ultrasonic distributor, blender, or stirrer in order to disperse the first particles 30 and second particles 40.

The electrode 12a is a transparent electrode formed over substantially the whole inner face of the substrate 11 a. On the other hand, the electrode 12b is a matrix electrode formed like a matrix on the inner face of the substrate 11b. The matrix electrode may be either of simple matrix control performed per row or column as a unit or of active matrix control which can independently carry out open-state ON/OFF control by providing individual pixels with semiconductor switching devices such as TFT and MIM, and is preferably of active matrix control. In particular, an organic TFT is used as a semiconductor switching device. The electrode 12b may be a full-area electrode as well.

When a voltage is applied between the electrodes 12a, 12b in this display device, an electric field acts within the solvent 50, thereby yielding a difference between respective moving speeds of the first particle 30 and second particle 40. Then, when the first particles 30 gather on one substrate 11a side, this part is seen black from one substrate 11a side, whereas a part where the first particles 30 do not gather on one substrate 11a side does not become black but is seen white or the like because of the reflection due to the second particles 40, whereby this device can be utilized as a display device.

The display device of this embodiment uses a particle mainly composed of carbon having a substantially spherical outer form as the first particle 30. This first particle 30 has a substantially spherical outer form and thus has a smaller surface area per volume than that of carbon particles having irregular shapes such as carbon black. This reduces the interaction between the first particles 30, so that the first particles 30 are easier to disperse, whereby aggregates of the first particles 30 are harder to form. As a consequence, the moving speed of the first particles 30, i.e., display speed, increases. Since aggregates of the first particles 30 are harder to form, the contrast improves as well. Since the first particles 30 have a substantially spherical outer form, the number of points at which the first particles 30 come into contact with each other decreases even when the first particles 30 flocculate. As a consequence, the resistance of the first particles 30 as an aggregate becomes higher than that of conventional irregular-shaped carbon black aggregates. Hence, the electrodes are less likely to be short-circuited by the aggregate.

Carbon is chemically stable, and is highly resistant to light, weather, and electricity. Further, it has a particle density of 1500 to 2000 kg/m³, which is lower than that of conventional inorganic materials such as iron oxide, and thus is harder to precipitate in the medium. As a consequence, it can keep information for a long period and yield a higher memory effect ratio. The moving speed becomes higher as well.

Carbon black defined in the present application is a carbon material having a structure in which primary particles of channel black, furnace black, acetylene black, Ketjen black, and the like are fused together, an irregular shape, and a high cohesiveness, and is used as a pigment or conductive material.

Preferably, 0.05 to 10 wt % of the first particles 30 is contained in terms of the weight of the medium.

At such a concentration, the reflectance of a part where the first particles 30 gather by moving toward the viewer side becomes sufficiently low so as to be fully recognized as black by the viewer. This realizes a display device with a sufficient contrast. Since the number of first particles 30 is not so large, the display speed becomes appropriate. Also, this can sufficiently hide the color of the second particles such as titanium oxide, for example, and the like.

Preferably, such a plurality of first particles 30 have a particle size falling within the range of 50 nm to 5 µm.

When the particle size exceeds 5 µm, the particles tend to yield a moving speed which is too slow, and apt to precipitate by overcoming Brownian motion and the like. The display speed decreases when the moving speed is slow, whereas the storability of information deteriorates when the particles are easy to precipitate. When the particle size is smaller than 50 nm, on the other hand, the particles are harder to disperse. Preferably, the plurality of first particles 30 have a uniform particle distribution.

A carbonized bead is preferably used as such a first particle 30 in particular. The carbonized bead is a spherical carbon particle obtained by preparing a spherical polymer cured product (phenol resin, urea resin, furan resin, or the like) and then heating it to about 300 to 1500°C in an inert gas or reducing atmosphere so as to effect a pyrolysis or the like. Such a carbonized bead has an amorphous structure.

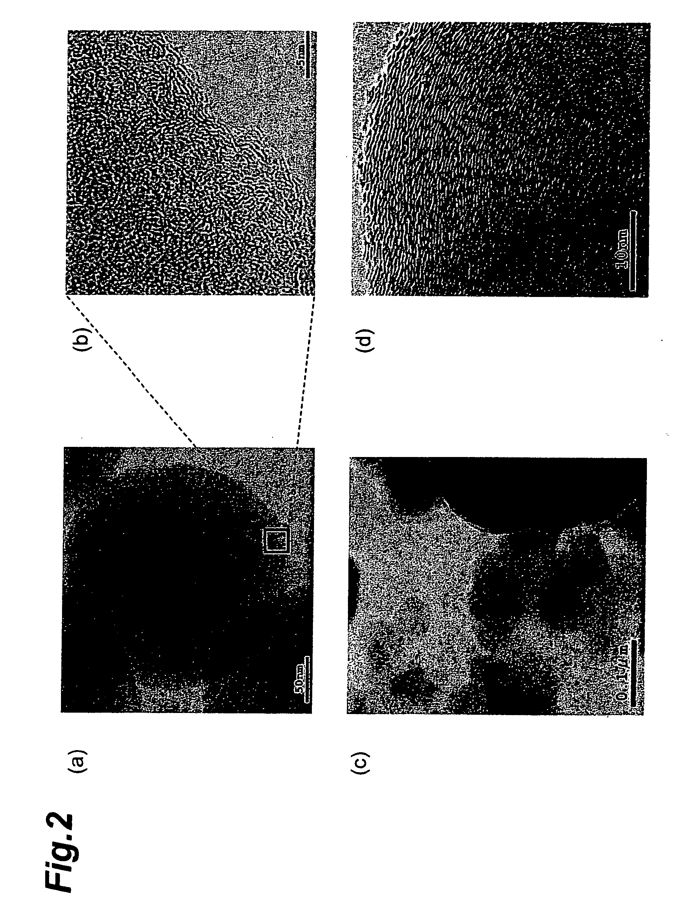

In Fig. 2, (a) and (b) show TEM images of the carbonized bead, whereas (c) and (d) show TEM images of carbon black as a typical crystalline carbon solid.

The volume resistivity (5.0 Ω·cm) of the amorphous carbonized bead is greater than the volume resistivity (0.15 Ω·cm) of a typical carbon black particle, i.e., a crystalline carbon solid in which flat 6-membered ring structure crystals are stacked, or the like.

Therefore, even when such first particles 30 flocculate, the resistance as an aggregate becomes further greater than that in the case using crystalline spherical carbon particles, so that the short-circuiting between electrodes is less likely to occur. Since the carbonized bead is close to a perfect sphere in particular, the number of contact points becomes smaller, so that the short-circuiting is less likely to occur.

In the carbonized bead, the spherical polymer cured product to become a material can be produced by such methods as reversed micelle, microgel, emulsion polymerization, seed polymerization, dispersion polymerization, two-stage swelling, spreading over a water surface, and spray drying. When conditions at that time are appropriately adjusted, a spherical polymer cured product corresponding to the above-mentioned particle size range can be formed easily. As a consequence, carbonizing the cured product can easily yield a spherical carbonized bead falling within the above-mentioned particle size range.

It will also be preferred if thermal black is used in place of the carbonized bead. Thermal black refers to a product made by pyrolyzing a gaseous or liquid hydrocarbon such as natural gas or petroleum in a heated furnace. The thermal black made by this method has a large particle size in general and a spherical or similar outer form.

Preferably, a decomposition product formed upon the pyrolysis of hydrocarbon remains on the surface of the first particle 30 such as carbonized bead or thermal black. Such a decomposition product is formed when manufacturing the carbonized bead, thermal black, or the like. Such a decomposition product is mainly composed of a hydrocarbon compound and exhibits a high electric insulation, thereby being effective in enhancing the specific resistance of the surface in the first particles 30. More specific examples of the residue include hydrocarbons having a high boiling point and condensed polycyclic aromatic hydrocarbons. According to a GC-MS analysis in particular, it is mainly constituted by condensed polycyclic aromatic hydrocarbons, and is soluble to toluene while exhibiting fluorescence.

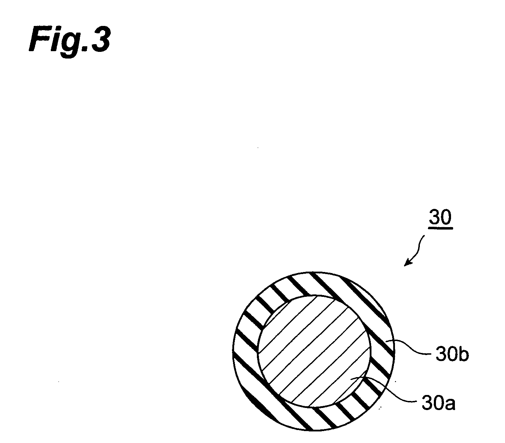

As shown in Fig. 3, the first particle 30 may be one in which, on the surface of a core 30a mainly composed of carbon, an insulative layer (cladding part) 30b having an electric resistance higher than that of the core 30a is positively formed. Specific examples include one having a surface covered with a polymer compound, one having an insulator deposited on the surface, one having an insulator attached thereto, and one having an oxidized surface. These also enhance the resistance in the surface of the first particle 30, so that, even when the first particles 30 flocculate to form an aggregate, the resistance as the aggregate further increases, whereby the short-circuiting between the electrodes 11a, 11b is less likely to occur.

Specific examples of the insulative layer 30b formed on the surface are either inorganic or organic compounds such as inorganic salts, inorganic oxides, hydrocarbon compounds, polysiloxane, polytitanosiloxane, polyaluminosiloxane, polyborosiloxane, polycarbosilane, polycarbosilazane, polysilazane, silicone, polyethylene, polypropylene, polystyrene, nylon, acrylic resin, polycarbonate, polyurethane, epoxy resin, phenol resin, fluorine resin, vinyl chloride resin, ABS, polyethylene terephthalate, polyvinyl alcohol, ethylene/vinyl acetate copolymer, ethylene/vinyl alcohol copolymer, cellulose ether, and starch. Without being restricted to these compounds, any compound can be used as the insulator.

For example, as a method of attaching a metal oxide such as silica, alumina, or iron oxide to a spherical carbon particle, a fine powder of a metal oxide is dispersed in an organic solvent such as methanol or ethanol or an aqueous solution of the organic solvent, whereas spherical carbon particles are dipped in this dispersion solution, subsequently dried at 100°C to 400°C in the air, and then heat-treated at 500 to 1000°C in an inert atmosphere, whereby the first particles 30 having a metal oxide uniformly formed about a carbonaceous particle as a core can be obtained.

On the other hand, for example, spherical carbon particles may be dipped in a solution in which a metal nitrate or metal alkoxide is appropriately diluted, subsequently dried at 100 to 400°C in the air, and then heat-treated at 500 to 1000°C in an inert atmosphere, whereby the first particles 30 having a metal oxide uniformly formed about a carbonaceous particle as a core can be obtained.

As a method of manufacturing a spherical carbonaceous particle having an oxidized surface, various oxidizers such as ozone, nitric acid, hydrogen peroxide, potassium permanganate, and sodium hypochlorite may be brought into contact with the spherical carbonaceous particle, so as to oxidize its surface, whereby an insulative film can be formed on the surface of the first particle 30.

Specifically, spherical carbon particles are dipped in a solution containing any of the above-mentioned oxidizers dissolved therein. Alternatively, in the case of a gas such as ozone, spherical carbon particles are brought into direct contact therewith in a gas phase, so as to effect oxidization. This oxidization produces carboxyl group, carbonyl group, hydroxyl group, lactone, etc. on the particle surface, so that, according to A. Voet, et al. Kolloid Z. Polymere, 201, [1] 39 (1965), a state where the insulative layer made of the oxidizing material is formed on the particle surface is attained, whereby the specific resistance of the surface increases remarkably.

When the insulative layer 30b is formed on the surface of the first particle 30, it is preferred that, as the solvent 50, one which does not adversely affect the insulative layer 30b be chosen.

Various functional groups may be combined with the surface of the first particle 30. Examples of the functional groups include linear, cyclic, and branched organic groups and ion groups. Such a functional group can be combined with the surface of spherical carbon by oxidizing the surface and then substituting a carboxyl group or the like on the surface with a surfactant. This can also enhance the resistance in the surface of the first particle 30, so that, even when the first particles 30 flocculate so as to form an aggregate, the aggregate further increases its resistance, whereby the short-circuiting is less likely to occur between the electrodes 12a, 12b.

Further, it will be preferred if such a particle that a given three-dimensional molded body formed by compression-molding an aggregate of the first particles 30 at a pressure of 5 MPa yields a volume resistivity of at least 5.0 Ω·cm is used as the first particle 30.

The volume resistivity of the molded body indicates the degree of current flowability when the first particles 30 flocculate. The short-circuiting is less likely to occur when the first particle 30 by which the volume resistivity of the molded body falls within the above-mentioned range is used.

On the other hand, known non-black particles such as white or pale ones, e.g., titanium oxide, zinc oxide, lead carbonate, lithopone, zinc sulfide, antimony oxide, PTFE particles, hollow polymer particles, and the like, can be used as the second particles 40. The second particles 40 may be a composite material as well.

Preferably, the second particle 40 also has a spherical outer form here. This reduces the surface area per volume, makes it easier for the second particles 40 to disperse, and suppresses the aggregation between the second particles 40 and between the first particle 30 and second particle 40. This can achieve a further improvement in the contrast and a further increase in the display speed.

Here, as mentioned above, one kind of the first and second particles may be moved alone in the medium, so as to perform display. When the other kind of particles does not move, the particle size thereof may be much greater than that of one kind of the particles. As the other kind of particles that do not move, spherical carbonaceous particles can also be used. In this case, it will be sufficient if not the first particles 30 but the second particles 40 exhibit electrophoresis, for example.

### Second Embodiment

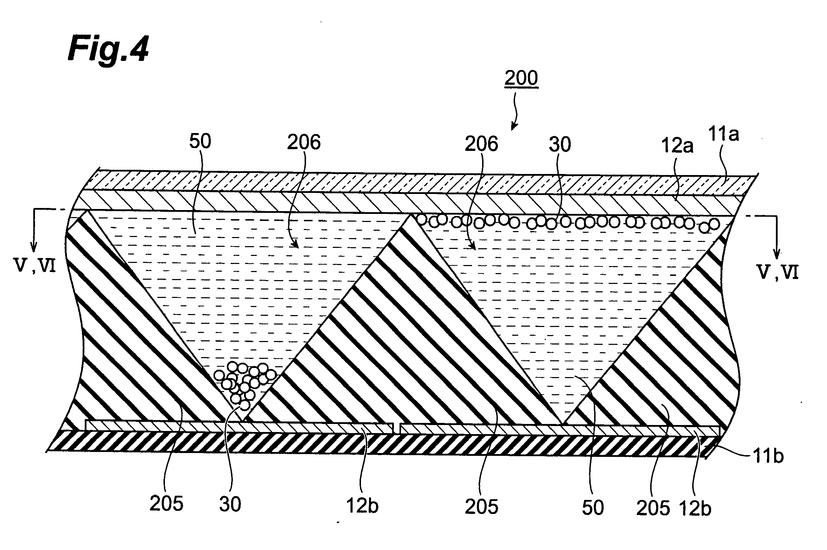

The display device in accordance with a second embodiment of the present invention will now be explained with reference to Figs. 4 to 6.

As shown in Fig. 4, the display device in accordance with this embodiment differs from the display device 100 in accordance with the first embodiment in that electrically insulative partitions 205, interposed between electrodes 12a, 12b, for dividing the space between the electrodes 12a, 12b into a matrix in directions orthogonal to the thickness of the electrodes 12a, 12b are provided in place of the microcapsules 14.

The height of each partition 205 is on a par with the distance between the electrodes 11a, 12b. The partitions 205 form a plurality of funnel-like spaces 206, each tapering its horizontal cross-sectional area from one substrate 11a to the other substrate 11b, horizontally between the electrodes 12a, 12b.

Each of the spaces 206 is filled with a solvent 50, whereas first particles 30 are contained in the solvent 50. Second particles 40 are not required to exist in particular.

Here, the surface of the partition 205 on the space 206 side is white.

In this display device 200, application of an electric field can cause the first particles 30 to gather at the lower end part of the funnel-like space 206 as in the space 206 on the left side of Fig. 4 or arrange the first particles 30 at the topmost part of the funnel-like space 206 so as to cover the whole face of the electrode 12a from thereunder as in the space 206 on the right side of Fig. 4.

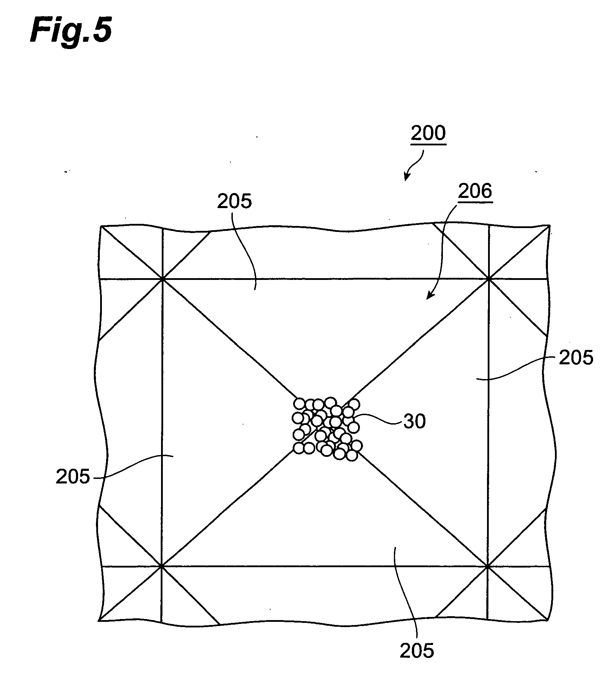

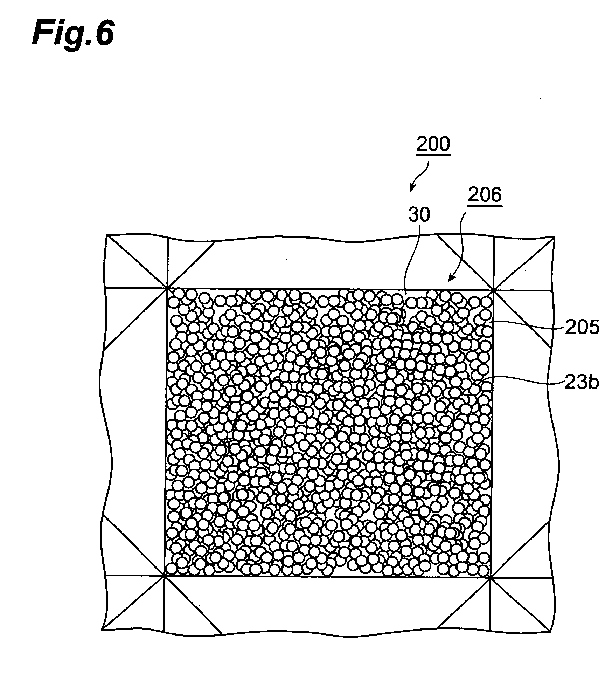

When the first particles 30 exist in the lower part upon the electric field application as in the left-side space 206 of Fig. 4, the black first particles 30 are concentrated at the center part as seen from the substrate 11a side as shown in Fig. 5, whereby the light reflected by the partition 205 increases. Consequently, this space 206 as a whole appears to be the color of the surface of the partition 205, i.e., substantially white. When the first particles 30 are distributed in the upper part upon the electric field application as in the right-side space 206 of Fig. 4, the black first particles 30 scattered over the upper face of the space 206 hardly emit the reflected light at the time of seeing the space 206 as shown in Fig. 6, whereby the partition 205 is shielded and appears black.

Namely, varying the position of the first particles 30 between the substrates 11a, 11b can alter the ratio between the area occupied by the partition 205 and the area occupied by the first particles 30 as seen from the upper side depicted in Fig. 6, whereby the contrast can continuously be changed.

The partition 205 is not limited to the above-mentioned form. It will be sufficient if the partition 205 has such a form that its horizontal cross-sectional area tapers down from the substrate 11a to the substrate 11b.

The color of the upper face of the partition 205 is not limited to white. For example, pale colors and the like can be utilized.

This embodiment uses the first particles 30 similar to those of the first embodiment, and thus exhibits operations and effects similar to those of the first embodiment.

### Third Embodiment

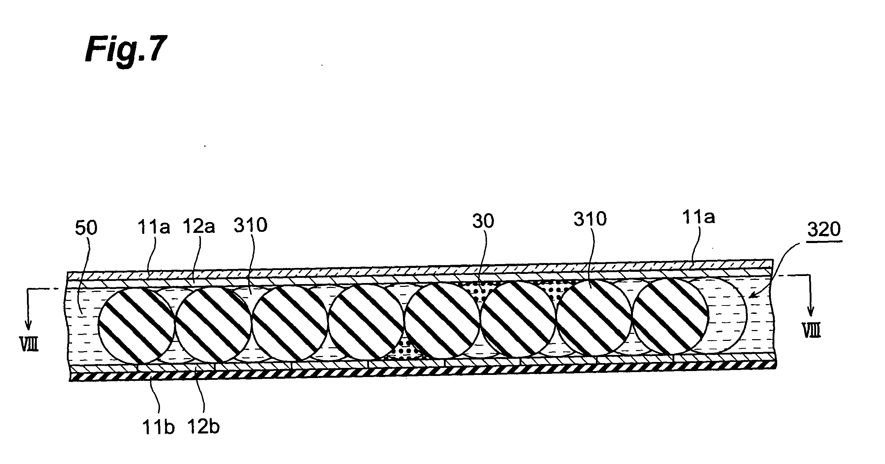

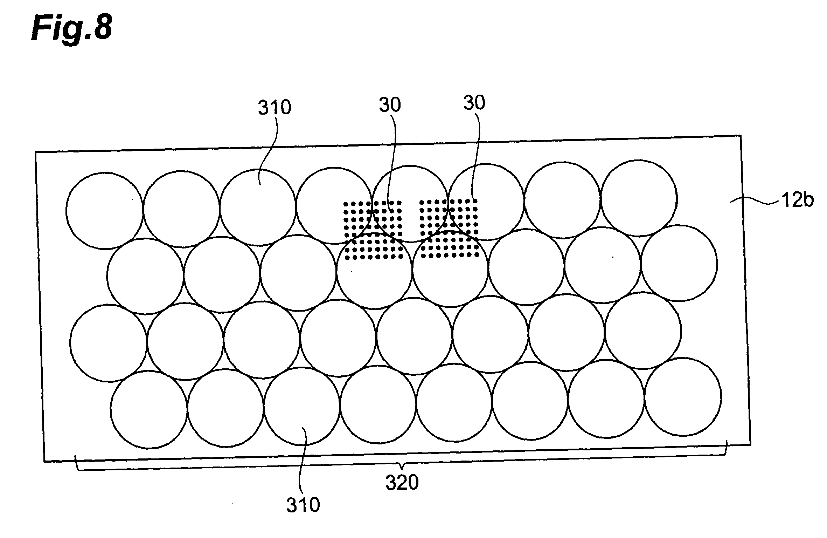

The display device in accordance with a third embodiment of the present invention will now be explained with reference to Figs. 7 and 8.

The display device 30 in accordance with this embodiment differs from the display device 100 in accordance with the first embodiment in that a plurality of huge spheres 310 filling the space between the electrodes 12a, 12b are provided in place of the microcapsules 14 and second particles 40 as shown in Fig. 7.

Each of the huge spheres 310 is an insulator whose diameter equals the distance between the electrodes 12a, 12b. As shown in Fig. 8, a plurality of spheres 310 are substantially close-packed by one layer between the electrodes 12a, 12b, so as to form a shield 320. The particle size of each huge sphere 310 is sufficiently larger than that of the first particle 30, so that the first particle 30 can pass through the gap between the huge spheres 310. The huge sphere 310 is a particle containing titanium oxide, for example, and appears white or pale.

In this display device 300, when the first particles 30 are arranged on the depicted upper part by moving upward upon application of an electric field, this part appears black when seen from thereabove, since the first particles 30 reduces the reflected light.

When moved downward upon the electric field application, on the other hand, the first particles 30 pass through interstices in the shield 320. Consequently, when seen from the upper side, the first particles 30 are blocked by the shield so as to become invisible, whereas the reflected light is enhanced by the white huge spheres 310 constituting the shield 320, so that the white or pale color is seen, whereby contrast can be provided.

The shield 320 is not limited to a body filled with particles, but may be any of porous bodies, woven fabrics, lattice filters, and the like as long as it can cover the first particles 30 such that they are invisible from the upper substrate 11 a side when moved to the lower substrate 11b side, while the surface opposing the upper substrate 11a exhibits a color different from that of the first particles 30.

More specifically, it will be sufficient if the shield 320 allows the first particles 30 moving between the substrate 11a, 11b to enter and exit, while the surface color thereof is white or pale. This can selectively block/expose the first particles as the first particles 30 move, so as to make the first particles 30 visible/invisible from the display surface side of the first particles 30, whereby changes in contrast can be exhibited. Examples of the method of coloring the shield 320 include coating, kneading, impregnation, and the like with pigments and dyes.

This embodiment uses the first particles 30 similar to those of the first embodiment, and can exhibit operations and effects similar to those of the first embodiment.

Though the display device of the present invention is explained with reference to the accompanying drawings in the foregoing, the present invention is not limited to these examples. It is clear that so-called one skilled in the art can achieve various modified examples and altered examples within the scope of technical idea described in claims, and they are naturally considered to belong to the technical scope of the present invention.

For example, the display device 100 may be a so-called toner display in which the first particles 30 move within a gas at a predetermined pressure or a vacuum as a moving medium. In this case, the space where the first particles 30 move is filled with air or an inert gas such as nitrogen, or made substantially vacuum, for example. Moisture is important in particular, so that a dried gas or a vacuum is preferred.

In the above, an essential difference between the toner display and electrophoretic display lies in whether the medium disposed about the first particles 30 is a gas (or substantially vacuum) or liquid. Namely, the present invention also encompasses electrophoretic displays of a type in which the first particles 30 are injected as electric charges from the electrodes 12a, 12b as with the toner display. The first particles 30 themselves may inherently be electrically charged to some extent, and electric charges may further be injected therein, whereas a case yielding electric charges by friction is also included.

The microcapsules 14 are not always necessary, whereas the electrodes 12a, 12b for the electric field application are not essential constituents of the display device in accordance with the present invention. An example of schemes of applying an electric field without using the electrodes 12a, 12b is one employing an electric field applicator such as voltage application head or voltage application pen, for instance, disposed on the outside of the display device 100.

While the first particles 30 move in response to an action from the outside, examples of the action include not only electric fields but also heat, light, sounds, and magnetic fields. An example of the case based on the magnetic field action is a magnetically driven display device in which spherical carbon particles having magnetic substances added thereto are provided so as to be movable as the first particles 30. The configurations of the above-mentioned display devices 100 are typical electrically driven types in which particles are moved under the action of electric fields, and are particularly preferred modes, since their power consumption is smaller than that in magnetically driven types and the like.

### Examples

The present invention will now be explained in further detail with reference to examples, which do not restrict the present invention at all.

### Example 1

Into 95 wt % of isoparaffin ISOPAR G (manufactured by Exxon Chemical Co.), 1.0 wt % of spherical carbon particles (having an average particle size of 120 nm) in which a carbonaceous structure near the surface was a layer-like structure of a flat carbon 6-membered ring similar to carbon black as first particles and 3.0 wt % of titanium dioxide (having an average particle size of 1 µm) as second particles were dispersed together with 1.0 wt % of a nonionic dispersing agent (manufactured by NOF Corporation) by using an ultrasonic distributor, and the resulting mixture was filtrated through a 5-µm filter, so as to prepare a dispersion solution for electrophoresis.

### Example 2

A dispersion solvent for electrophoresis was prepared as in Example 1 except that 1.0 wt % of spherical carbonized beads (having an average particle size of 120 nm) in which a decomposition residue existed on the particle surface was used as carbon particles.

### Example 3

A dispersion solution for electrophoresis was prepared as in Example 2 except that the amount of spherical carbonized beads was 2.0 wt %.

### Example 4

A dispersion solution for electrophoresis was prepared as in Example 2 except that the spherical carbonized beads had an average particle size of 500 nm.

### Example 5

A dispersion solution for electrophoresis was prepared as in Example 1 except that 1.0 wt % of a product obtained by oxidizing the particle surface of carbonized beads having an average particle size of 120 nm with ozone and then substituting the surface with 2-(perfluorooctyl)ethoxysilane group and 3.0 wt % of titanium dioxide similarly having substituted the surface with 2-(perfluorooctyl)ethoxysilane group were dispersed into 95 wt % of FC-40 (manufactured by 3M).

### Example 6

A dispersion solution for electrophoresis was prepared as in Example 5 except that the carbonized beads had an average particle size of 500 nm.

### Example 7

A dispersion solution for electrophoresis was prepared as in Example 1 except that spherical thermal black having an average particle size of 120 nm was used as carbonaceous particles.

### Example 8

A dispersion solution for electrophoresis was prepared as in Example 1 except that 550nm first particles made by forming a film of ethyl cellulose on the surface of 500nm carbonized beads by bombardment in a high-speed airflow and then substituting its surface with 2-(perfluorooctyl)ethoxysilane group were used.

Here, the bombardment in a high-speed airflow is a method in which nuclear particles (carbonized beads) and coating material particles (ethyl cellulose) are dispersed in a high-speed airflow, so that these particles collide with each other and are provided with mechanical/thermal energy mainly composed of an impulsive force, whereby a coating is formed on the nuclear particle surface. This bombardment action is said to have a fixing action of bombarding the nuclear particle surface with coating particles and a softening/melting action for the film-forming material particles on the nuclear particle surface.

### Example 9

A dispersion solution for electrophoresis was prepared as in Example 8 except that 540nm first particles made by forming a film of silicon dioxide (SiO₂) on the surface of 500nm carbonized beads by bombardment in a high-speed airflow and then substituting its surface with 2-(perfluorooctyl)ethoxysilane group were used.

### Comparative Example 1

A dispersion solution for electrophoresis was prepared as in Example 1 except that carbon black having an irregular shape (manufactured by Mitsubishi Chemical Corporation) was used as carbon particles.

### Comparative Example 2

A dispersion solution for electrophoresis was prepared as in Example 1 except that ferrosoferric oxide (manufactured by Kanto Chemical Co., Inc.) was used in place of the carbon particles.

### Comparative Example 3

A dispersion solution for electrophoresis was prepared as in Example 1 except that 0.5 wt % of a diazo coloring matter (manufactured by Arimoto Chemical Co., Ltd.) was used in place of the carbon particles.

### Comparative Example 4

A dispersion solution for electrophoresis was prepared as in Example 1 except that 0.5 wt % of an anthraquinone coloring matter (manufactured by Arimoto Chemical Co., Ltd.) was used in place of the carbon particles.

Then, fading ratios of these dispersion solutions for electrophoresis were measured. Specifically, each dispersion solution for electrophoresis was diluted to 1/1000, and thus diluted sample was put into a square cell with an inner size of 10 mm and exposed to direct sunlight for 5 hours on a fine day. Thereafter, the fading ratio was determined as the ratio of change between the absorbance at the maximum absorption wavelength in the visible light region of each sample and the absorbance thereof at the same wavelength before the exposure.

### Making of the display device

Glass sheets having respective opposing surfaces sputtered with ITO were arranged so as to oppose each other with a gap of 100 µm by way of a spacer, thereby making a display cell. Subsequently, thus formed display cells were filled with respective dispersion solutions for electrophoresis.

Then, with a DC voltage of 30 V applied between the electrodes, the contrast ratio and memory effect ratio were measured, and an energizing test was performed, so as to see whether short-circuiting occurred or not. After the energizing test, it was determined whether aggregation occurred or not.

Here, the contrast ratio was determined by emitting a light beam from a light source of a metal halide lamp placed at a position distanced from the cell surface by 30 cm, and dividing the maximum value of luminance of reflected light obtained at that time by the minimum value. The memory effect ratio was determined by applying a voltage under the same condition as with the light-emitting condition mentioned above, dividing the luminance of reflected light after the lapse of 60 seconds from the termination of voltage application by the maximum value of luminance of the reflected light before terminating the electric field application, and expressing thus obtained value in terms of percent.

For the energizing test, a voltage of 100 V was continuously applied between the electrodes for 24 hours while reversing the polarity of voltage at 1 cycle/sec. By utilizing the fact that the ITO changed its color to brown or black because of sparks and eddy currents due to short-circuiting and the like after the energizing test, it was determined whether short-circuiting occurred or not. Whether there was aggregation or not was verified by visually observing the inside of the cell after the energizing test.

As an index of the resistance value in the state where carbonaceous particles flocculated, the volume resistivity of a molded body of an aggregate of each kind of carbonaceous particles was measured. Specifically, a mold made of SUS having a diameter of 19 mm was filled with each kind of carbonaceous particles, and a circular molded body was made at a molding pressure of 5 MPa. After the circular molded body was heated for 1 hour at 100°C in a vacuum dryer under a reduced pressure of about 10 mmHg, the temperature was returned to normal temperature under the reduced pressure. Thereafter, the circular molded body was taken out from the vacuum dryer, and its volume resistivity was determined. The measurement was performed by a 4-terminal 4-probe method using an MCP-T600 resistivity meter manufactured by Mitsubishi Chemical Corporation.

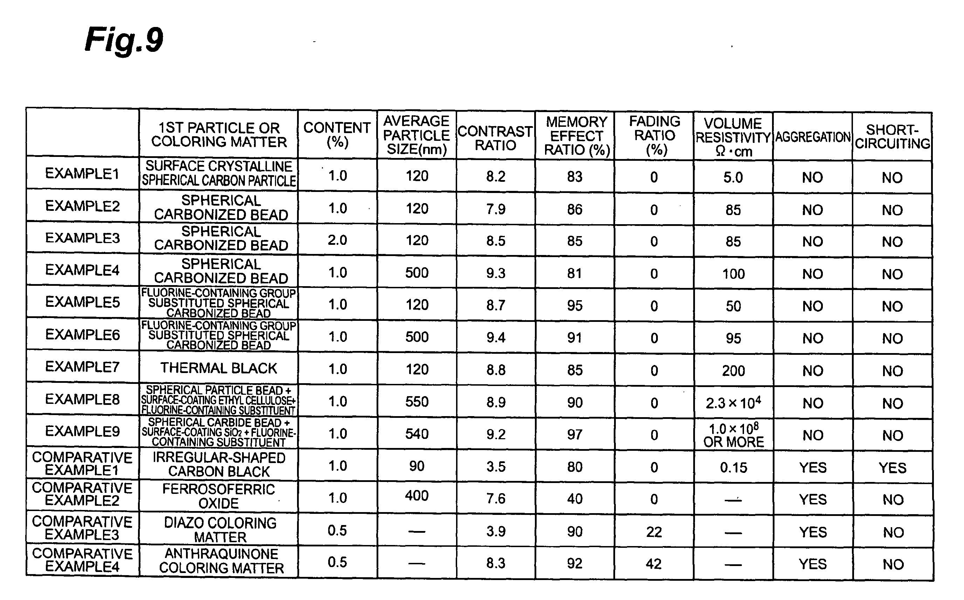

Fig. 9 shows these results. As compared with Comparative Example 1 using irregular-shaped carbon particles, Examples 1 to 9 employing spherical carbon particles exhibited better dispersibility, so that the carbonaceous particles did not flocculate nor adhere to each other, for example, whereby a high contrast of 7.9 or more was attained. On the other hand, Comparative Example 1 exhibited an inferior dispersibility, so that aggregation, adhesion, and the like occurred. In particular, contrast remarkably deteriorated because of the adhesion to the transparent electrode on the display side.

Though no short-circuiting was seen in Examples 1 to 9 using spherical carbon particles, short-circuiting was found in Comparative Example 1 employing irregular-shaped carbonaceous particles. This seems to be because aggregation is hard to occur when using spherical carbonaceous materials and, even if an aggregate is formed, short-circuiting is harder to occur since the volume resistivity of its filler layer is much higher than that of the filler layer of the irregular-shaped carbonaceous particles. This can also be understood from the fact that the volume resistivity in the irregular-shaped carbonaceous particles (Comparative Example 1) was 0.15 Ω·cm whereas each of the carbonaceous particles in Examples 1 to 9 yielded a volume resistivity of 5.0 Ω·cm or greater.

Examples 1 to 9 using chemically stable carbonaceous particles yield fading properties much lower than those of Examples 3, 4 employing coloring matters. Examples 1 to 9 using particles having a particle density on the order of 1500 to 2000 kg/m³ relatively close to the density of the solvent are harder to precipitate than Comparative Example 2 employing ferrosoferric oxide, and yield higher memory effects.

These results have verified that the display device in accordance with the present invention makes it harder for first particles to flocculate, and can suppress the short-circuiting between the electrodes.

## Claims

1. A display device including a pair of substrates, an electrically insulating medium accommodated between the substrates, and a particle existing in the medium; the display device performing display according to a difference in reflectance based on a change in spatial distribution of the particle between the substrates;
wherein the particle includes a plurality of first particles, mainly composed of carbon, having a substantially spherical outer form.

2. The display device according to claim 1, wherein the first particles contain carbon having an amorphous structure.

3. The display device according to claim 1 or 2, wherein the first particle includes a core part mainly composed of carbon and a cladding part surrounding the core part and having a specific resistance greater than that of the core part.

4. The display device according to claim 1 or 2, wherein the first particle has a surface combined with an organic functional group.

5. The display device according to one of claims 1 to 4, wherein the first particle is such a particle that a molded body formed by molding an aggregate of the first particles at a pressure of 5 MPa yields a volume resistivity of at least 5.0 Ω·cm.

6. The display device according to one of claims 1 to 5, wherein the first particle has a particle size of 50 nm to 5 µm.

7. The display device according to one of claims 1 to 6, wherein the particle further includes a plurality of second particles different from the first particles; and
wherein the second particles have a surface color different from that of the first particles.

8. The display device according to claim 7, wherein the second particles have a substantially spherical outer form.

9. The display device according to one of claims 1 to 6, further comprising a shield between the substrates, the shield being adapted to cover the first particles moved to one of the substrates so as to make the first particles invisible from the other substrate side and having a color different from that of the first particles on a face opposing the other substrate.

10. The display device according to one of claims 1 to 6, further comprising a partition between the substrates, the partition defining a plurality of spaces each tapering a cross-sectional area thereof from one of the substrates to the other substrate, the partition having a color different from that of the first particles at a part in contact with the spaces.

11. The display device according to one of claims 1 to 10, containing 0.05 to 10 wt % of the first particles in terms of the weight of the medium.

12. The display device according to one of claims 1 to 11, wherein the first particles exhibit electrophoresis when an electric field acts thereon.

13. The display device according to one of claims 1 to 12, including a pair of electrodes, one of the electrodes being arranged in a matrix.
